# EUROPEAN PATENT APPLICATION

(11) **EP 4 407 709 A1**
(43) Date of publication of application: **31.07.2024**
(21) Application number: 22887710.6
(22) Date of filing: 28.10.2022
(51) Int. Cl.: H01M 4/36, H01M 4/525, H01M 4/505, H01M 10/052, H01M 4/02

(54) **CATHODE MATERIAL, CATHODE COMPRISING SAME AND LITHIUM SECONDARY BATTERY**

(30) Priority: 29.10.2021 KR 20210146643
(71) Applicant: LG Energy Solution, Ltd., Seoul 07335 (KR)
(72) Inventor: KIM, Ji Hye, Daejeon 34122 (KR); JUNG, Hae Jung, Daejeon 34122 (KR); HEO, Jong Wook, Daejeon 34122 (KR); OH, Sang Seung, Daejeon 34122 (KR)
(74) Representative: Hoffmann Eitle
(86) International application number: PCT/KR2022/016732
(87) International publication number: WO 2023/075515

(57) **Abstract**

The present invention relates to a bimodal positive electrode material including a large-particle diameter positive electrode active material and a small-particle diameter positive electrode active material, wherein, in the positive electrode material according to the present invention, the large-particle diameter positive electrode active material is a single particle composed of one nodule, and the small-particle diameter positive electrode active material is a pseudo-single particle which is an aggregate of 2 to 30 nodules.

## Description

### TECHNICAL FIELD

This application claims priority from Korean Patent Application No. 10-2021-0146643, filed on October 29, 2021, the disclosure of which is incorporated by reference herein.

The present invention relates to a positive electrode material, and a positive electrode and a lithium secondary battery which include the same, and more particularly, to a bimodal positive electrode material, in which excellent life characteristic and resistance characteristics may be achieved by using large-diameter particles and small-diameter particles of specific forms, and a positive electrode and a lithium secondary battery which include the same.

### BACKGROUND ART

A lithium secondary battery is generally composed of a positive electrode, a negative electrode, a separator, and an electrolyte, and the positive electrode and the negative electrode respectively include active materials capable of intercalating and deintercalating lithium ions.

Lithium cobalt oxide (LiCoO₂), lithium nickel oxide (LiNiO₂), lithium manganese oxide (LiMnO₂ or LiMn₂O₄), or a lithium iron phosphate compound (LiFePO₄) has been used as a positive electrode active material of the lithium secondary battery. Among them, the lithium cobalt oxide has advantages of high operating voltage and excellent capacity characteristics, but is difficult to be commercially used in a large-capacity battery due to the high price and supply instability of cobalt as a raw material. Since the lithium nickel oxide has poor structural stability, it is difficult to achieve sufficient life characteristics. The lithium manganese oxide has excellent stability, but has a problem in that capacity characteristics are inferior. Lithium composite transition metal oxides containing two or more types of transition metals have been developed to compensate for the problems of the lithium transition metal oxides containing nickel (Ni), cobalt (Co), or manganese (Mn) alone, and, among them, a lithium nickel cobalt manganese oxide containing Ni, Co, and Mn has been widely used.

A conventional lithium nickel cobalt manganese oxide was generally in a form of a spherical secondary particle in which tens to hundreds of primary particles were aggregated. However, with respect to the lithium nickel cobalt manganese oxide in the form of a secondary particle in which many primary particles are aggregated as described above, there is a problem in that particle breakage, in which the primary particles fall off in a rolling process during preparation of the positive electrode, is likely to occur and cracks occur in the particles during charge and discharge. In a case in which the particle breakage or cracking of the positive electrode active material occurs, since a contact area with an electrolyte solution is increased, active material degradation and gas generation due to a side reaction with the electrolyte solution are increased, and, as a result, there is a problem in that life characteristics are degraded.

To solve this problem, a lithium nickel cobalt manganese oxide in the form of a single particle has been developed. The lithium nickel cobalt manganese oxide in the form of a single particle is composed of one particle, wherein it may be prepared by a method in which a precursor for a positive electrode active material and a lithium source are mixed and then over-sintered by increasing a sintering temperature during sintering. Since the positive electrode active material in the form of a single particle has higher particle strength than a positive electrode active material in the form of a secondary particle, particle cracking may be prevented during electrode rolling. However, since the single-particle positive electrode active material has significantly lower lithium mobility than the positive electrode active material in the form of a secondary particle, there is a problem in that sufficient capacity and output characteristics may not be secured due to excessively high resistance when the single-particle positive electrode active material is used alone.

### DISCLOSURE OF THE INVENTION

### TECHNICAL PROBLEM

An aspect of the present invention provides a positive electrode material in which particle cracking is reduced during electrode rolling and an increase in resistance during cycle charge and discharge is minimized by including a large-particle diameter positive electrode active material and a small-particle diameter positive electrode active material in which particle forms are controlled.

Another aspect of the present invention provides a positive electrode and a lithium secondary battery in which life characteristics and resistance characteristics are improved by using the above-described positive electrode material.

### TECHNICAL SOLUTION

According to an embodiment, the present invention provides a bimodal positive electrode material including a large-particle diameter positive electrode active material and a small-particle diameter positive electrode active material, wherein the large-particle diameter positive electrode active material is a single particle composed of one nodule, and the small-particle diameter positive electrode active material is a pseudo-single particle which is an aggregate of 2 to 30 nodules.

According to another embodiment, the present invention provides a positive electrode including the positive electrode material according the present invention and a lithium secondary battery including the positive electrode.

### ADVANTAGEOUS EFFECTS

Since the positive electrode material according to the present invention uses a single particle composed of one nodule, as a large-particle diameter positive electrode active material, and a pseudo-single particle, which is an aggregate of 2 to 30 nodules, as a small-particle diameter positive electrode active material, particle cracking during electrode rolling may be reduced and an increase in resistance during charge and discharge may be suppressed. Accordingly, if the positive electrode material of the present invention is used, a secondary battery having excellent life characteristics and resistance characteristics may be prepared.

### BRIEF DESCRIPTION OF THE DRAWINGS

FIG. 1 is a scanning electron microscope image illustrating a particle form of large-particle diameter positive electrode active material A which is prepared according to Preparation Example 1.
FIG. 2 is a scanning electron microscope image illustrating a particle form of large-particle diameter positive electrode active material B which is prepared according to Preparation Example 2.
FIG. 3 is a scanning electron microscope image illustrating a particle form of large-particle diameter positive electrode active material C which is prepared according to Preparation Example 3.
FIG. 4 is a scanning electron microscope image illustrating a particle form of small-particle diameter positive electrode active material D which is prepared according to Preparation Example 4.
FIG. 5 is a scanning electron microscope image illustrating a particle form of small-particle diameter positive electrode active material E which is prepared according to Preparation Example 5.
FIG. 6 is a graph illustrating press densities of positive electrode material powders of Examples 1 and 2 and Comparative Examples 1 to 4.
FIG. 7 is a graph illustrating high-temperature life characteristics of lithium secondary batteries using positive electrode materials of Examples 1 and 2 and Comparative Examples 1 to 4.

### MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present invention, the expression "single particle" is a particle composed of one single nodule. In the present invention, the expression "pseudo-single particle" means a particle that is a composite formed of 30 or less nodules.

In the present invention, the expression "nodule" means a particle unit body constituting the single particle and the pseudo-single particle, wherein the nodule may be a single crystal lacking a crystalline grain boundary, or may be a polycrystal in which grain boundaries do not exist in appearance when observed by using a scanning electron microscope (SEM) or electron backscatter diffraction (EBSD) with a field of view of 5,000 times to 20,000 times. An average particle diameter of the nodules means an arithmetic average value of particle diameters which is calculated after measuring the particle diameters of the nodules observed through the SEM or EBSD.

The expression "secondary particle" in the present invention means a particle formed by aggregation of a plurality (tens to hundreds) of primary particles. More specifically, the secondary particle is an aggregate of 40 or more primary particles.

The expression "particle" used in the present invention may include any one or all of the single particle, the pseudo-single particle, the primary particle, the nodule, and the secondary particle. The expression "average particle diameter D₅₀" in the present invention means a particle size on the basis of 50% in a volume cumulative particle size distribution of positive electrode active material powder, wherein it may be measured by using a laser diffraction method. For example, after dispersing the positive electrode active material powder in a dispersion medium, the dispersion medium is introduced into a commercial laser diffraction particle size measurement instrument (e.g., Microtrac MT 3000) and then irradiated with ultrasonic waves of about 28 kHz at an output of 60 W to obtain a volume cumulative particle size distribution graph, and the average particle diameter D₅₀ may then be measured by obtaining a particle size corresponding to 50% of cumulative amount of volume.

With respect to "particle strength" in the present invention, after the positive electrode material powder is put into a particle strength measuring device (model name: MCT-510) and a form of a positive electrode active material particle to be measured is secured with a microscope, a force is applied to the corresponding positive electrode active material particle with a tip to measure a force when the corresponding particle breaks. Values measured more than 30 times are mapped in consideration of variation between the particles, and an average value thereof is used as a particle strength value.

"Press density" in the present invention was measured using HPRM-1000. Specifically, after putting 5 g of the positive electrode material powder into a cylindrical mold having a cross-sectional diameter of 1.2 cm, the mold containing the positive electrode material was pressed with a force of 2,000 kgf. Thereafter, a height of the pressed mold was measured with a Vernier caliper to obtain the press density.

The average aggregation number of nodules in a particle cross section of the positive electrode active material in the present invention may be measured in the following manner. After cutting a positive electrode, which was prepared by using the positive electrode material, by an ion milling method and obtaining a cross-sectional image of the cut positive electrode in a thickness direction using a scanning electron microscope (SEM), at least 30 or more particles were selected from large-diameter positive electrode active material particles and small-diameter positive electrode active material particles in the image, respectively, and the number of nodules in a cross section of each positive electrode active material particle was measured through SEM image analysis. Then, an arithmetic average value of the numbers of nodules measured was calculated to evaluate the value as the average aggregation number of nodules in the particle cross section.

### Positive Electrode Material

A positive electrode material according to the present invention is a bimodal positive electrode material including two types of positive electrode active materials having different average particle diameters (D₅₀), that is, a large-particle diameter positive electrode active material having a relatively larger particle diameter and a small-particle diameter positive electrode active material having a relatively smaller particle diameter.

The bimodal positive electrode material has an advantage in that the small-particle diameter positive electrode active material fills pores of the large-particle diameter positive electrode active material during electrode rolling to increase electrode density, and, as a result, high energy density may be achieved. However, with respect to a bimodal positive electrode material using a conventional positive electrode active material in the form of a secondary particle, there was a problem in that particle cracking of the large-particle diameter positive electrode active material is intensified because particle strengths of the large-particle diameter positive electrode active material and the small-particle diameter positive electrode active material are different from each other. In order to solve the above-described problem, the present invention used high-strength single particles and pseudo-single particles as the large-particle diameter positive electrode active material and the small-particle diameter positive electrode active material, respectively. Specifically, in the present invention, the single particle is used as the large-particle diameter positive electrode active material of the bimodal positive electrode material, and the pseudo-single particle is used as the small-particle diameter positive electrode active material. Herein, the single particle means a particle composed of one nodule, and the pseudo-single particle means an aggregate of 2 to 30 nodules, preferably 2 to 25 nodules, and more preferably 2 to 20 nodules.

Since the positive electrode active material in the form of a single particle or a pseudo-single particle has higher particle strength than the conventional positive electrode active material in the form of a secondary particle in which tens to hundreds of primary particles are aggregated, particle cracking during rolling is reduced and changes due to volume expansion and contraction during charge and discharge are small so that occurrence of cracks in the particles are significantly reduced. Thus, in a case in which the single particle is used as the large-diameter particle and the pseudo-single particle is used as the small-diameter particle as in the present invention, since battery performance degradation due to gas generation and internal cracks in the positive electrode active material may be minimized, a lithium secondary battery having excellent life characteristics, particularly, high-temperature life characteristics may be prepared.

However, in a case in which the single particle or the pseudo-single particle is used as the positive electrode active material, since lithium mobility is lower than that of the conventional positive electrode active material in the form of a secondary particle, there is a problem in that resistance is increased and capacity characteristics and output characteristics are degraded. As a result of a significant amount of research conducted into developing a positive electrode material with a low increase in resistance as well as excellent life characteristics, the present inventors have found that the increase in resistance may be suppressed when forms of particles constituting the large-particle diameter positive electrode active material and the small-particle diameter positive electrode active material satisfy specific conditions, that is, when the large-particle diameter positive electrode active material satisfies a single particle form and the small-particle diameter positive electrode active material satisfies a pseudo-single particle form, thereby leading to the completion of the present invention.

Cracks may occur along an interface between sub-particles (i.e., primary particles or nodules) constituting the positive electrode active material particle during electrode rolling, wherein, if cracks occur in the active material, an electrolyte solution penetrates into the cracks to increase the resistance. In a case in which cracks occur in the large-particle diameter positive electrode active material, the increase in resistance is further intensified because an area in contact with the electrolyte solution due to the cracks is larger than that of the small-particle diameter positive electrode active material. Thus, in the present invention, since the occurrence of cracks in the large-particle diameter positive electrode active material is minimized by using the single particle composed of one nodule as the large-particle diameter positive electrode active material, the increase in resistance may be suppressed.

The number of nodules constituting the small-particle diameter positive electrode active material may be in a range of 2 to 30, preferably 2 to 25, more preferably 2 to 20, and even more preferably 2 to 10.

In a case in which the number of nodules constituting the small-particle diameter positive electrode active material is greater than 30, particle cracking may occur during electrode rolling to degrade the life characteristics, and, in a case in which the small-particle diameter positive electrode active material is in the form of a single particle, electrode rollability is reduced, and, as a result, the electrode density may be reduced to degrade the capacity characteristics.

Preferably, when the average aggregation number of nodules in a cross section of the particle of the small-particle diameter positive electrode active material is r', 1/r' may be 0.5 or less, preferably, 0.1 to 0.5. According to the research of the present inventors, when the 1/r' satisfies the above range, an effect of improving life characteristics and resistance characteristics is more excellent.

The number of nodules constituting the large-particle diameter positive electrode active material and the small-particle diameter positive electrode active material may be adjusted by controlling sintering conditions. In general, a positive electrode active material is prepared by mixing a precursor, which is a transition metal hydroxide, and a lithium source and then sintering the mixture, wherein the higher the sintering temperature is and the longer the sintering time is, the smaller the number of nodules constituting the positive electrode active material particle is. Thus, the number of nodules constituting the positive electrode active material particle may be adjusted by controlling the sintering temperature and/or the sintering time during the preparation of the positive electrode active material. For example, in a case in which compositions of the large-particle diameter positive electrode active material and the small-particle diameter positive electrode active material are the same, the 1/r' may be 0.5 or less by allowing the sintering temperature of the large-particle diameter positive electrode active material to be higher than the sintering temperature of the small-particle diameter positive electrode active material by 20°C or more, preferably, by about 20°C to about 80°C.

In the present invention, the large-particle diameter positive electrode active material may have an average particle diameter D₅₀ of 10 µm to 20 µm, preferably 10 µm to 18 µm, and more preferably 10 µm to 15 µm. Also, the small-particle diameter positive electrode active material may have an average particle diameter D₅₀ of 1 µm to 8 um, preferably 3 µm to 8 µm, and more preferably 3 µm to 7 µm. When the average particle diameters D₅₀ of the large-particle diameter positive electrode active material and the small-particle diameter positive electrode active material satisfy the above ranges, press density of the positive electrode material is increased, and, accordingly, the electrode density may be improved during the preparation of the electrode to achieve excellent energy density.

In the present invention, the large-particle diameter positive electrode active material and the small-particle diameter positive electrode active material may each independently include a lithium nickel-based oxide.

Specifically, the large-particle diameter positive electrode active material and the small-particle diameter positive electrode active material may each independently include a lithium nickel-based oxide represented by the following [Formula 1].

[Formula 1] LiₐNi_{b}Co_{c}M¹_{d}M²ₑO₂

In Formula 1, M¹ may be manganese (Mn), aluminum (Al), or a combination thereof, and may preferably be Mn or Mn and Al.

M² may be at least one selected from the group consisting of zirconium (Zr), tungsten (W), yttrium (Y), barium (Ba), calcium (Ca), titanium (Ti), magnesium (Mg), tantalum (Ta), and niobium (Nb), may preferably be at least one selected from the group consisting of Zr, Y, Mg, and Ti, and may more preferably be Zr, Y, or a combination thereof. The element M² is not necessarily included, but, in a case in which it is included in an appropriate amount, it may play a role in promoting grain growth during sintering or improving crystal structure stability.
a represents a molar ratio of lithium in the lithium nickel-based oxide, wherein a may satisfy 0.8≤a≤1.3, 0.9≤a≤1.3, or 1.0≤a≤1.2. When the molar ratio of the lithium satisfies the above range, a crystal structure of the lithium nickel-based oxide may be stably formed.
b represents a molar ratio of nickel among total metals excluding lithium in the lithium nickel-based oxide, wherein b may satisfy 0.8≤b<1, 0.82≤b<1, 0.83≤b<1, 0.85≤b<1, or 0.87≤b<1. When the molar ratio of the nickel satisfies the above range, high energy density may be exhibited to achieve high capacity.
c represents a molar ratio of cobalt among the total metals excluding lithium in the lithium nickel-based oxide, wherein c may satisfy 0<c<0.2, 0<c<0.18, or 0.01≤c≤0.17. When the molar ratio of the cobalt satisfies the above range, good resistance characteristics and output characteristics may be achieved.
d represents a molar ratio of element M¹ among the total metals excluding lithium in the lithium nickel-based oxide, wherein d may satisfy 0<d<0.2, 0<d<0.18, or 0.01≤d≤0.17. When the molar ratio of the element M¹ satisfies the above range, the structural stability of the positive electrode active material is excellent.
e represents a molar ratio of element M² among the total metals excluding lithium in the lithium nickel-based oxide, wherein e may satisfy 0≤e≤0.1 or 0≤e≤0.05.

The large-particle diameter positive electrode active material and the small-particle diameter positive electrode active material according to the present invention may further include a coating layer on a surface of the lithium nickel-based oxide particle, if necessary. In this case, the coating layer, for example, may include at least one coating element selected from the group consisting of Al, Ti, W, boron (B), fluorine (F), phosphorus (P), Mg, nickel (Ni), cobalt (Co), iron (Fe), chromium (Cr), vanadium (V), copper (Cu), Ca, zinc (Zn), Zr, Nb, Mn, strontium (Sr), antimony (Sb), bismuth (Bi), silicon (Si), and sulfur (S). In a case in which the coating layer is present on the surface of the lithium nickel-based oxide, a contact between an electrolyte and the lithium nickel-based oxide is reduced by the coating layer, and, as a result, an effect of reducing gas generation or transition metal dissolution due to a side reaction with the electrolyte may be obtained. Preferably, the coating layer may include B, Co, Al, or a combination thereof, and may more preferably include Co. In a case in which Co is included in the coating layer, an effect of improving output and reducing resistance may be obtained in addition to an effect of suppressing the side reaction with the electrolyte.

The compositions of the large-particle diameter positive electrode active material and the small-particle diameter positive electrode active material may be the same or different. For example, a molar ratio of Ni in the large-particle diameter positive electrode active material may be higher than a molar ratio of Ni in the small-particle diameter positive electrode active material. Since the large-particle diameter positive electrode active material is in the form of a single particle, it has better structural stability than the small-particle diameter positive electrode active material in the form of a pseudo-single particle, and, accordingly, structural degradation due to heat or repeated charge and discharge is less even if it includes a high amount of Ni. Thus, in a case in which a lithium nickel-based oxide containing a relatively higher amount of Ni is used as the large-particle diameter positive electrode active material, a secondary battery having excellent life characteristics as well as high capacity may be achieved. Specifically, the large-particle diameter positive electrode active material may include a lithium nickel-based oxide containing 85 mol% or more, preferably, 87 mol% or more of nickel, and the small-particle diameter positive electrode active material may include a lithium nickel-based oxide containing 80 mol% or more to less than 87 mol%, preferably 80 mol% to 86 mol%, and more preferably 83 mol% to 86 mol% of nickel.

It is desirable that particle strength of the large-particle diameter positive electrode active material is higher than particle strength of the small-particle diameter positive electrode active material. Specifically, the particle strength of the large-particle diameter positive electrode active material may be 2 times or more, preferably 2 times to 4 times, and more preferably 2 times to 3 times the particle strength of the small-particle diameter positive electrode active material. When the particle strength of the large-particle diameter positive electrode active material is two times or more the particle strength of the small-particle diameter positive electrode active material, since the particle cracking of the large-particle diameter positive electrode active material is minimized, an excellent effect of suppressing the increase in resistance may be obtained.

Specifically, the particle strength of the large-particle diameter positive electrode active material may be in a range of 150 MPa to 300 MPa, preferably, 180 MPa to 220 MPa, and the particle strength of the small-particle diameter positive electrode active material may be in a range of 75 MPa to 150 MPa, preferably, 90 MPa to 110 MPa. When the particle strengths of the large-particle diameter positive electrode active material and the small-particle diameter positive electrode active material satisfy the above ranges, the particle cracking during electrode rolling is minimized, and porosity and electrode density of an active material layer of a positive electrode may be appropriately formed.

The positive electrode material may include the large-particle diameter positive electrode active material and the small-particle diameter positive electrode active material in a weight ratio of 60:40 to 90:10, preferably, 70:30 to 80:20. When the weight ratio of the large-particle diameter positive electrode active material to the small-particle diameter positive electrode active material satisfies the above range, excellent capacity characteristics and life characteristics may be achieved.

The positive electrode material may have a press density, which is measured by pressing the positive electrode material powder at 2,000 kgf, of 3.0 g/cc to 4.0 g/cc, preferably 3.0 g/cc to 3.8 g/cc, and more preferably 3.0 g/cc to 3.6 g/cc. When the press density of the positive electrode material satisfies the above range, a secondary battery having excellent energy density may be prepared.

### Positive Electrode

Next, a positive electrode according to the present invention will be described.

The positive electrode according to the present invention includes the above-described positive electrode material of the present invention. Specifically, the positive electrode includes a positive electrode collector and a positive electrode active material layer formed on the positive electrode collector, and the positive electrode active material layer includes the positive electrode material according to the present invention.

Since the positive electrode material has been described above, detailed descriptions thereof will be omitted, and the remaining configurations will be only described in detail below.

The positive electrode collector may include a metal having high conductivity, and is not particularly limited as long as it has no reactivity in a voltage range of the battery and the positive electrode active material layer is easily adhered thereto. As the positive electrode collector, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may optionally include a conductive agent and a binder in addition to the positive electrode material, if necessary.

In this case, the positive electrode material may be included in an amount of 80 wt% to 99 wt%, more specifically, 85 wt% to 98.5 wt% based on a total weight of the positive electrode active material layer. When the positive electrode active material is included in an amount within the above range, excellent capacity characteristics may be obtained.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 15 wt% based on the total weight of the positive electrode active material layer.

The binder improves the adhesion between positive electrode material particles and the adhesion between the positive electrode material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with lithium (Li), sodium (Na), or calcium (Ca), or various copolymers thereof, and any one thereof or a mixture of two or more thereof may be used. The binder may be included in an amount of 0.1 wt% to 15 wt% based on the total weight of the positive electrode active material layer.

The positive electrode may be prepared according to a typical method of preparing a positive electrode except that the above-described positive electrode material is used. Specifically, a positive electrode material mixture, which is prepared by dissolving or dispersing the above-described positive electrode material as well as optionally the binder, the conductive agent, and a dispersant, if necessary, in a solvent, is coated on the positive electrode collector, and the positive electrode may then be prepared by drying and rolling the coated positive electrode collector, or the positive electrode may be prepared by casting the positive electrode material mixture on a separate support and then laminating a film separated from the support on the positive electrode collector.

The solvent may be a solvent normally used in the art. The solvent may include dimethyl sulfoxide (DMSO), isopropyl alcohol, N-methylpyrrolidone (NMP), dimethyl formamide (DMF), acetone, or water, and any one thereof or a mixture of two or more thereof may be used. An amount of the solvent used may be sufficient if the solvent may dissolve or disperse the positive electrode active material, the conductive agent, the binder, and the dispersant in consideration of a coating thickness of the slurry and manufacturing yield, and may allow to have viscosity that may provide excellent thickness uniformity during the subsequent coating for the preparation of the positive electrode.

### Lithium Secondary Battery

Next, a lithium secondary battery according to the present invention will be described.

The lithium secondary battery specifically includes a positive electrode, a negative electrode disposed to face the positive electrode, a separator disposed between the positive electrode and the negative electrode, and an electrolyte, wherein, since the positive electrode is the same as described above, detailed descriptions thereof will be omitted, and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500 µm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. The negative electrode active material may be included in an amount of 80 wt% to 99 wt% based on a total weight of the negative electrode active material layer.

The binder is a component that assists in the binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

The conductive agent is a component for further improving conductivity of the negative electrode active material, wherein the conductive agent may be included in an amount of 10 wt% or less, preferably, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder and nickel powder; conductive whiskers such as zinc oxide whiskers and potassium titanate whiskers; conductive metal oxide such as titanium oxide; or polyphenylene derivatives may be used.

The negative electrode active material layer may be prepared by coating a negative electrode material mixture, which is prepared by dissolving or dispersing optionally the binder and the conductive agent as well as the negative electrode active material in a solvent, on the negative electrode collector and drying the coated negative electrode collector, or may be prepared by casting the negative electrode material mixture on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, an anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN-, and (CF₃CF₂SO₂)₂N⁻, and LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 4.0 M. If the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 wt% to 5 wt% based on a total weight of the electrolyte.

As described above, since the lithium secondary battery including the bimodal positive electrode material according to the present invention stably exhibits excellent discharge capacity, output characteristics, and life characteristics, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Examples of the medium and large sized device may be an electric vehicle, a hybrid electric vehicle, a plug-in hybrid electric vehicle, and a power storage system, but the medium and large sized device is not limited thereto.

Hereinafter, the present invention will be described in more detail, according to specific examples.

### Preparation Example 1 - Preparation of Large-Particle Diameter Positive Electrode Active Material A (Single Particle)

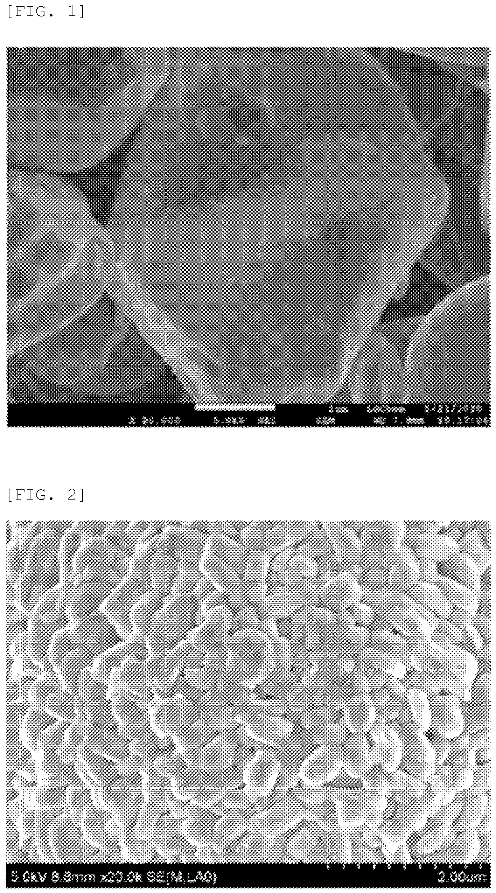

Ni_{0.88}Co_{0.08}Mn_{0.04}(OH)₂ having an average particle diameter D₅₀ of 12 µm and LiOH were mixed so that a molar ratio of transition metals (Ni+Co+Mn) :Li was 1:1.03, and sintered at 850°C for 12 hours to prepare large-particle diameter positive electrode active material A (Li Ni_{0.88}Co_{0.08}Mn_{0.04}O₂). Positive electrode active material A powder prepared was observed with a scanning electron microscope (SEM) to confirm a particle form. An SEM image of the positive electrode active material A prepared by the above method is illustrated in FIG. 1. As illustrated in FIG. 1, the positive electrode active material A was in the form of a single particle composed of one nodule.

### Preparation Example 2 - Preparation of Large-Particle Diameter Positive Electrode Active Material B (Secondary Particle)

Large-particle diameter positive electrode active material B (LiNi_{0.88}Co_{0.08}Mn_{0.04}O₂) was prepared in the same manner as in Preparation Example 1 except that sintering was performed at 800°C for 10 hours. Positive electrode active material B powder prepared was observed with a scanning electron microscope to confirm a particle form. An SEM image of the positive electrode active material B prepared by the above method is illustrated in FIG. 2. As illustrated in FIG. 2, the positive electrode active material B was in the form of a secondary particle in which one or more primary particles were aggregated.

### Preparation Example 3 - Preparation of Large-Particle Diameter Positive Electrode Active Material C (Pseudo-single Particle)

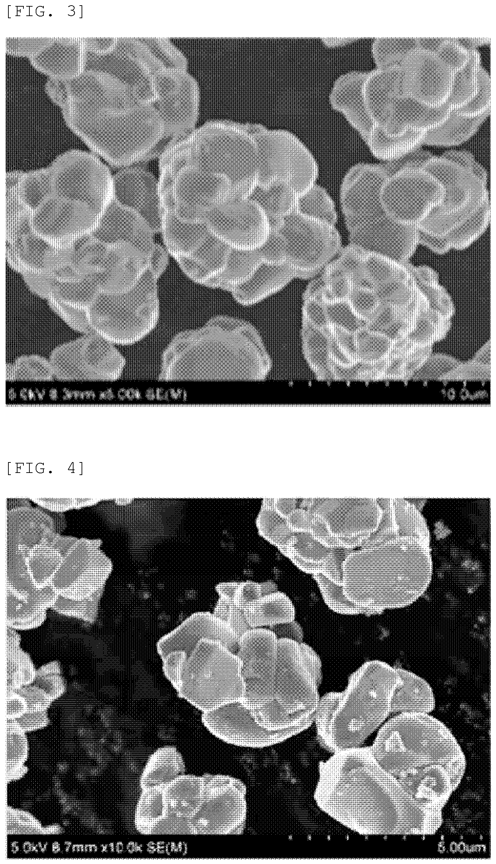

Large-particle diameter positive electrode active material C (LiNi_{0.88}Co_{0.08}Mn_{0.04}O₂) was prepared in the same manner as in Preparation Example 1 except that sintering was performed at 830°C for 10 hours. Positive electrode active material C powder prepared was observed with a scanning electron microscope to confirm a particle form. An SEM image of the positive electrode active material C prepared by the above method is illustrated in FIG. 3. As illustrated in FIG. 3, the positive electrode active material C was in the form of a pseudo-single particle in which ten to twenty nodules were aggregated.

### Preparation Example 4 - Preparation of Small-Particle Diameter Positive Electrode Active Material D (Pseudo-single Particle)

Ni_{0.86}Co_{0.08}Mn_{0.06}(OH)₂ having an average particle diameter D50 of 3.7 um and LiOH were mixed so that a molar ratio of transition metals (Ni+Co+Mn) :Li was 1:1.05, and sintered at 800°C for 12 hours to prepare small-particle diameter positive electrode active material D (Li Ni_{0.86}Co_{0.08}Mn_{0.06}O₂). Positive electrode active material D powder prepared was observed with a scanning electron microscope to confirm a particle form. An SEM image of the positive electrode active material D prepared by the above method is illustrated in FIG. 4. As illustrated in FIG. 4, the positive electrode active material D prepared by the above method was in the form of a pseudo-single particle in which ten to twenty nodules were aggregated.

### Preparation Example 5 - Preparation of Small-Particle Diameter Positive Electrode Active Material E (Secondary Particle)

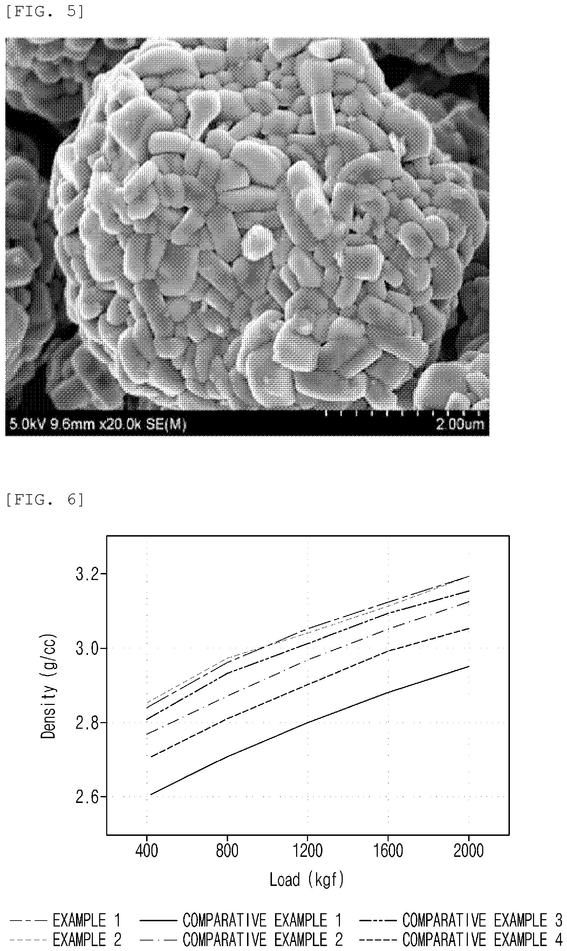

Small-particle diameter positive electrode active material E (LiNi_{0.86}Co_{0.08}Mn_{0.06}O₂) was prepared in the same manner as in Preparation Example 4 except that sintering was performed at 780°C for 10 hours. Positive electrode active material E powder prepared was observed with a scanning electron microscope to confirm a particle form. An SEM image of the positive electrode active material E prepared by the above method is illustrated in FIG. 5. As illustrated in FIG. 5, the positive electrode active material E was in the form of a secondary particle in which a few tens or more primary particles were aggregated.

### Example 1

A positive electrode material was prepared by mixing the large-particle diameter positive electrode active material A prepared in Preparation Example 1 and the small-particle diameter positive electrode active material D prepared in Preparation Example 4 at a weight ratio of 80:20.

### Example 2

A positive electrode material was prepared by mixing the large-particle diameter positive electrode active material A prepared in Preparation Example 1 and the small-particle diameter positive electrode active material D prepared in Preparation Example 4 at a weight ratio of 70:30.

### Comparative Example 1

A positive electrode material was prepared by mixing the large-particle diameter positive electrode active material B prepared in Preparation Example 2 and the small-particle diameter positive electrode active material E prepared in Preparation Example 5 at a weight ratio of 80:20.

### Comparative Example 2

A positive electrode material was prepared by mixing the large-particle diameter positive electrode active material B prepared in Preparation Example 2 and the small-particle diameter positive electrode active material D prepared in Preparation Example 4 at a weight ratio of 80:20.

### Comparative Example 3

A positive electrode material was prepared by using the small-particle diameter positive electrode active material D prepared in Preparation Example 4 alone.

### Comparative Example 4

A positive electrode material was prepared by mixing the large-particle diameter positive electrode active material C prepared in Preparation Example 3 and the small-particle diameter positive electrode active material D prepared in Preparation Example 4 at a weight ratio of 80:20.

### Experimental Example 1: Press Density

After putting 5 g of each of the positive electrode material powders of Examples 1 and 2 and Comparative Examples 1 to 4 into a cylindrical mold having a cross-sectional diameter of 1.2 cm, the mold containing the positive electrode material was pressed with loads of 400 kgf, 800 kgf, 1,200 kgf, 1,600 kgf, and 2,000 kgf. Thereafter, a height of the pressed mold was measured with a Vernier caliper to obtain press density. Measurement results are presented in FIG. 6 below. It may be confirmed through FIG. 6 that the positive electrode materials of Examples 1 and 2 exhibited higher press densities than the positive electrode materials of Comparative Examples 1 to 4.

### Experimental Example 2: Measurement of the Aggregation Number of Sub-particles in Particle Cross Section

Each of the positive electrode materials prepared in Examples 1 and 2 and Comparative Examples 1 to 4, a conductive agent (carbon nanotubes, LB-CNT), and a PVdF binder were mixed in N-methylpyrrolidone at a weight ratio of 97.2:1.2:1.6 to prepare a positive electrode slurry. One surface of an aluminum current collector was coated with the positive electrode slurry, dried, and then rolled to prepare a positive electrode.

After cutting the prepared positive electrode with an ion milling method to obtain a cross-sectional image in a thickness direction, 30 particles were selected for each of the large-particle diameter positive electrode active material and the small-particle diameter positive electrode active material through image analysis, and the number of nodules or primary particles in a cross section of each particle was measured. An arithmetic average value of the numbers of nodules or primary particles in the particle cross sections, which were measured in 30 large-diameter positive electrode active material particles, was set as the average aggregation number r of nodules or primary particles in the cross section of the large-diameter positive electrode active material particle, and an arithmetic average value of the number of nodules or primary particles in the particle cross sections, which were measured in 30 small-particle diameter positive electrode active material particles, was set as the average aggregation number r' of nodules or primary particles in the cross section of the small-diameter positive electrode active material particle. Measurement results are presented in Table 1 below.

**[Table 1]**

| | r | r' | r/r' |
|---|---|---|---|
| Example 1 | 1 | 3 | 0.33 |
| Example 2 | 1 | 3 | 0.33 |
| Comparative Example 1 | 60 | 30 | 2 |
| Comparative Example 2 | 60 | 3 | 20 |
| Comparative Example 3 | - | 3 | - |
| Comparative Example 4 | 10 | 10 | 1 |

### Experimental Example 3: Life Characteristics Evaluation

### <Secondary Battery Preparation>

Each of the positive electrode materials prepared in Example 1 and 2 and Comparative Examples 1 to 4, a conductive agent (carbon nanotubes, LB-CNT), and a PVdF binder were mixed in N-methylpyrrolidone at a weight ratio of 97.2:1.2:1.6 to prepare a positive electrode slurry. One surface of an aluminum current collector was coated with the positive electrode slurry, dried, and then rolled to prepare a positive electrode.

A negative electrode active material (a mixture of SiO and graphite, a weight ratio of graphite:Si = 94.5:3.3), a mixed conductive agent, in which Super C65 and single-walled CNT were mixed in a weight ratio of 98:2, as a conductive agent, and an SBR binder (M37, LG Chem) were mixed in water at a weight ratio of 95.57:1:3.43 to prepare a negative electrode slurry. One surface of a copper current collector was coated with the negative electrode slurry, dried, and then rolled to prepare a negative electrode.

A separator was disposed between the positive electrode and the negative electrode and then put in a battery case, and an electrolyte was injected thereinto to prepare a lithium secondary battery.

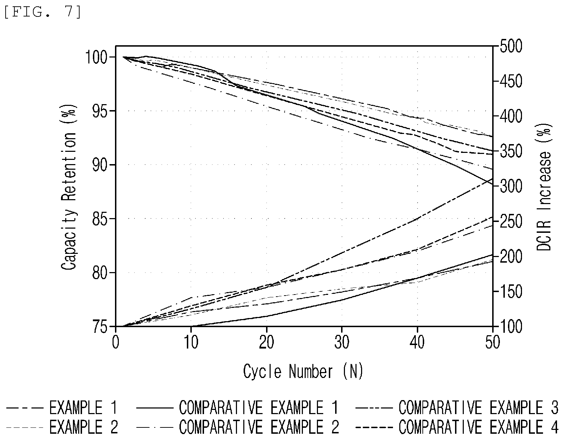

While charging of the lithium secondary battery prepared as described above at 0.5 C to 4.25 V at 45°C and discharging of the battery at 1 C to 2.5 V were set as one cycle and 50 cycles of the charging and discharging were performed, a resistance increase rate (DCIR increase) and capacity retention were measured. Measurement results are presented in FIG. 7 and Table 2 below.

In this case, the resistance increase rate and the capacity retention were calculated through Equations 1 and 2 below. Resistance increase rate (%) = { (resistance after 50 cycles/resistance after 1 cycle) × 100} - 100 Capacity retention (%) = (discharge capacity after 50 cycles/discharge capacity after 1 cycle) × 100

**[Table 2]**

| | | Example 1 | Example 2 | Compara tive Example 1 | Compara tive Example 2 | Compara tive Example 3 | Compara tive Example 4 |
|---|---|---|---|---|---|---|---|
| Resi stan ce | After 1 cycle (ohm) | 11.6 | 12.0 | 17.4 | 16.9 | 15.6 | 15.0 |
| | After 50 cycles (ohm) | 22.4 | 23.7 | 35.2 | 35.1 | 48.7 | 38.5 |
| | Resistance increase rate (%) | 93.5 | 97.3 | 102.1 | 145.1 | 211.5 | 156.5 |
| Capacity retention (%) | | 92.5 | 92.6 | 88.2 | 89.5 | 91.0 | 90.9 |

As illustrated in Table 2 and FIG. 7, the lithium secondary batteries using the positive electrode materials of Examples 1 to 2 had better effects in terms of capacity retention and resistance increase rate than the lithium secondary batteries using the positive electrode materials of Comparative Examples 1 to 4.

## Claims

1. A positive electrode material which is a bimodal positive electrode material comprising a large-particle diameter positive electrode active material and a small-particle diameter positive electrode active material,
wherein the large-particle diameter positive electrode active material is a single particle composed of one nodule, and
the small-particle diameter positive electrode active material is a pseudo-single particle which is an aggregate of 2 to 30 nodules.

2. The positive electrode material of claim 1, wherein, when the average aggregation number of nodules in a cross section of the particle of the small-particle diameter positive electrode active material is r', 1/r' is 0.5 or less.

3. The positive electrode material of claim 2, wherein the 1/r' is in a range of 0.1 to 0.5.

4. The positive electrode material of claim 1, wherein the large-particle diameter positive electrode active material has an average particle diameter D50 of 10 um to 20 um, and
the small-particle diameter positive electrode active material has an average particle diameter D50 of 1 um to 8 µm.

5. The positive electrode material of claim 1, wherein the large-particle diameter positive electrode active material and the small-particle diameter positive electrode active material each independently comprise a lithium nickel-based oxide represented by [Formula 1].
[Formula 1] LiₐNi_{b}Co_{c}M¹_{d}M²ₑO₂
wherein, in Formula 1, M¹ is manganese (Mn), aluminum (Al), or a combination thereof, M² is at least one selected from the group consisting of zirconium (Zr), tungsten (W), yttrium (Y), barium (Ba), calcium (Ca), titanium (Ti), magnesium (Mg), tantalum (Ta), and niobium (Nb), and 0.8≤a≤1.2, 0.83≤b<1, 0<c<0.17, 0<d<0.17, and 0≤e≤0.1.

6. The positive electrode material of claim 1, wherein particle strength of the large-particle diameter positive electrode active material is 2 times or more particle strength of the small-particle diameter positive electrode active material.

7. The positive electrode material of claim 1, wherein particle strength of the large-particle diameter positive electrode active material is in a range of 150 MPa to 300 MPa, and
particle strength of the small-particle diameter positive electrode active material is in a range of 75 MPa to 150 MPa.

8. The positive electrode material of claim 1, wherein the positive electrode material comprises the large-particle diameter positive electrode active material and the small-particle diameter positive electrode active material in a weight ratio of 60:40 to 90:10.

9. The positive electrode material of claim 1, wherein press density, which is measured by pressing the positive electrode material at 2,000 kgf, is in a range of 3.0 g/cc to 4.0 g/cc.

10. A positive electrode comprising the positive electrode material of any one of claims 1 to 9.

11. A lithium secondary battery comprising the positive electrode of claim 10.
